# EUROPEAN PATENT APPLICATION

(11) **EP 2 919 302 A1**
(43) Date of publication of application: **16.09.2015**
(21) Application number: 13852601.7
(22) Date of filing: 12.11.2013
(51) Int. Cl.: H01M 4/525, H01M 4/505

(54) **POSITIVE ELECTRODE ACTIVE MATERIAL, LITHIUM BATTERY, AND MANUFACTURING METHOD FOR POSITIVE ELECTRODE ACTIVE MATERIAL**

(30) Priority: 12.11.2012 JP 2012248701
(71) Applicant: Kyushu University, National University Corporation, Fukuoka-shi, Fukuoka 812-8581 (JP); TOYOTA JIDOSHA KABUSHIKI KAISHA, Toyota-shi, Aichi-ken, 471-8571 (JP)
(72) Inventor: OKADA, Shigeto, Fukuoka-shi Fukuoka 812-8581 (JP); KITAJOU, Ayuko, Fukuoka-shi Fukuoka 812-8581 (JP); YOSHIDA, Jun, Toyota-shi Aichi 471-8571 (JP); NAKANISHI, Shinji, Toyota-shi Aichi 471-8571 (JP)
(74) Representative: TBK
(86) International application number: PCT/JP2013/080562
(87) International publication number: WO 2014/073701

(57) **Abstract**

The problem of the present invention is to provide a cathode active material which performs favorable discharge capacity. The present invention solves the problem by providing a cathode active material comprising a crystal phase of an inverse-spinel structure represented by LiM₁₋ₓFeₓVO₄ (M is Co or Ni, and x satisfies 0 < x < 1).

## Description

### Technical Field

The present invention relates to a cathode active material which performs favorable discharge capacity.

### Background Art

In accordance with a rapid spread of information relevant apparatuses and communication apparatuses such as a personal computer, a video camera and a portable telephone in recent years, the development of a battery to be used as a power source thereof has been emphasized. The development of a high-output and high-capacity battery for an electric automobile or a hybrid automobile has been advanced also in the automobile industry. A lithium battery has been presently noticed from the viewpoint of a high energy density among various kinds of batteries.

A lithium battery is ordinarily provided with a cathode layer, an anode layer, and an electrolyte layer formed between the cathode layer and the anode layer. Also, the cathode layer and the anode layer ordinarily have a cathode active material and an anode active material, respectively. An active material is an important member for determining the performance of the battery, and various studies are being made thereon. For example, in Patent Literature 1, a lithium battery such that part of a cathode includes a lithium transition metal oxide having an inverse-spinel structure is disclosed. In addition, LiNiVO₄, LiCoVO₄ and LiCuVO₄ are disclosed as the lithium transition metal oxide.

### Citation List

### Patent Literature

Patent Literature 1: Japanese Patent Application Publication (JP-A) No. H07-192768

### Summary of Invention

### Technical Problem

An active material with an inverse-spinel structure has such a high potential as to be useful as a cathode active material. However, in the case of using the active material with an inverse-spinel structure as a cathode active material, the problem is that sufficient discharge capacity is not obtained.

The present invention has been made in view of the actual circumstances, and the main object thereof is to provide a cathode active material which performs favorable discharge capacity.

### Solution to Problem

In order to solve the problems, the present invention provides a cathode active material comprising a crystal phase of an inverse-spinel structure represented by LiM₁₋ₓFeₓVO₄ (M is Co or Ni, and x satisfies 0 < x < 1).

According to the present invention, the substitution of part of Co or Ni constituting the inverse-spinel structure with Fe allows the cathode active material which performs favorable discharge capacity.

In the invention, the "x" preferably satisfies 0 < x ≤ 0.3.

Also, the present invention provides a cathode active material comprising a crystal phase of an inverse-spinel structure represented by LiCo_{1-x-y}NiₓMn_{y}VO₄ (x and y satisfy 0 < x, 0 < y, and x + y < 1).

According to the present invention, the substitution of part of Co constituting the inverse-spinel structure with Ni and Mn allows the cathode active material which performs extremely favorable discharge capacity. In other words, the use of three elements of Co, Ni and Mn as transition metal constituting the inverse-spinel structure allows the cathode active material which performs extremely favorable discharge capacity.

In the invention, both the "x" and the "y" are preferably 1/3.

In the invention, the cathode active material preferably has a composition of LiₐCo_{1-x-y}NiₓMn_{y}VO₄ (a satisfies 1 ≤ a ≤ 1.3) .

Also, the present invention provides a lithium battery comprising a cathode layer containing a cathode active material, an anode layer containing an anode active material, and an electrolyte layer formed between the cathode layer and the anode layer, characterized in that the cathode active material is the cathode active material described above.

According to the present invention, the use of the cathode active material described above allows the lithium battery having favorable discharge capacity.

Also, the present invention provides a method of producing a cathode active material comprising steps of: a preparation step of preparing a raw material solution in which a Li source, a M source (M is Co or Ni), a Fe source and a V source are dissolved or dispersed in a solvent, and a heat-treating step of removing the solvent contained in the raw material solution and heat-treating to thereby obtain a cathode active material having a crystal phase of an inverse-spinel structure represented by LiM₁₋ₓFeₓVO₄ (x satisfies 0 < x < 1).

According to the present invention, the substitution of part of Co or Ni constituting the inverse-spinel structure with Fe allows the cathode active material which performs favorable discharge capacity.

Also, the present invention provides a method of producing a cathode active material comprising steps of: a preparation step of preparing a raw material solution in which a Li source, a Co source, a Ni source, a Mn source and a V source are dissolved or dispersed in a solvent, and a heat-treating step of removing the solvent contained in the raw material solution and heat-treating to thereby obtain a cathode active material having a crystal phase of an inverse-spinel structure represented by LiCo_{1-x-y}NiₓMn_{y}VO₄ (x and y satisfy 0 < x, 0 < y, and x + y < 1).

According to the present invention, the substitution of part of Co constituting the inverse-spinel structure with Ni and Mn allows the cathode active material which performs extremely favorable discharge capacity. In other words, the use of three elements of Co, Ni and Mn as transition metal constituting the inverse-spinel structure allows the cathode active material which performs extremely favorable discharge capacity.

### Advantageous Effects of Invention

A cathode active material of the present invention produces the effect such as to be capable of performing favorable discharge capacity.

### Brief Description of Drawings

FIG. 1 is a schematic cross-sectional view showing an example of a lithium battery of the present invention.
FIG. 2 is a flow chart showing an example of a method of producing a cathode active material of the present invention.
FIG. 3 is a flow chart showing another example of a method of producing a cathode active material of the present invention.
FIGS. 4A and 4B are results of XRD measurement for a cathode active material each obtained in Examples 1 to 6 and Comparative Examples 1 and 2.
FIG. 5 is a result of charge-discharge measurement for an evaluation battery each obtained in Examples 1 to 3 and Comparative Example 1.
FIGS. 6A and 6B are results of charge-discharge measurement for an evaluation battery each obtained in Example 5 and Comparative Example 2.
FIG. 7 is a result of charge-discharge measurement for a cathode active material each obtained in Examples 1 to 6 and Comparative Examples 1 and 2.
FIGS. 8A to 8D are results of SEM observation for a cathode active material each obtained in Examples 7 to 9 and Comparative Example 1.
FIG. 9 is a result of XRD measurement for a cathode active material each obtained in Examples 7 to 9.
FIG. 10 is a result of charge-discharge measurement for an evaluation battery each obtained in Examples 7 to 9 and Comparative Example 1.

### Description of Embodiments

A cathode active material, a lithium battery, and a method of producing a cathode active material of the present invention are hereinafter described in detail.

### A. Cathode active material

The cathode active material of the present invention may be roughly divided into two aspects. The method of producing the cathode active material of the present invention is described while divided into a first aspect and a second aspect.

### 1. First aspect

The cathode active material of the first aspect comprises a crystal phase of an inverse-spinel structure represented by LiM₁₋ₓFeₓVO₄ (M is Co or Ni, and x satisfies 0 < x < 1).

According to the first aspect, the substitution of part of Co or Ni constituting the inverse-spinel structure with Fe allows the cathode active material which performs favorable discharge capacity. Conventionally, an active material with the inverse-spinel structure is high in electric potential but may not perform sufficient discharge capacity. The reason therefor is described by comparing with an active material with a regular spinel structure. For example, LiMn₂O₄ is known as the active material with a regular spinel structure. On the basis of the viewpoint of a space group of a crystal, LiMn₂O₄ has a space group Fd3-m in which Li atom is in 8a, Mn atom is in 16d and O atom is in 32e. It is conceived that a tunnel with an octahedron structure having Mn in the central portion and O atom at the vertex is formed in LiMn₂O₄, and Li ions transfer in the tunnel.

On the contrary, for example, LiCoVO₄ is known as the active material with the inverse-spinel structure. On the basis of the viewpoint of a space group of a crystal, it is guessed that LiCoVO₄ has a space group Fd3-m in which V atom is in 8a, Li atom and Co atom are in 16d and O atom is in 32e. It is guessed that a tunnel appropriate for the transfer of Li ions is not formed in LiCoVO₄. Thus, it is conceived that sufficient discharge capacity may not be performed for the reason that Li atom in the inverse-spinel structure exists in a different site from the normal spinel structure, and a tunnel appropriate for the transfer of Li ions is not formed in the inverse-spinel structure. The reason why the cathode active material of the first aspect may perform favorable discharge capacity is conceived to be that the substitution of part of Co or Ni with Fe probably causes the shape of the tunnel to change into a shape appropriate for the transfer (diffusion) of Li ions. Incidentally, for example, like LiNiVO₄, LiCoVO₄ and LiCuVO₄ described in Patent Literature 1, only one kind of transition metal (such as V, Co and Cu) may not cause the shape of the tunnel, through which Li ions transfer, to change. Also, in the first aspect, there is a possibility that the effect characteristic of Fe element improves discharge capacity.

The cathode active material of the first aspect comprises a crystal phase of an inverse-spinel structure represented by LiM₁₋ₓFeₓVO₄ (M is Co or Ni, and x satisfies 0 < x < 1). The presence of this crystal phase of an inverse-spinel structure may be confirmed by X-ray diffraction (XRD) measurement, for example. For example, the LiCo₁₋ₓFeₓVO₄ (0 < x < 1) crystal phase ordinarily has a typical peak in the vicinity of 2θ = 18.5°, 30.5°, 36.5°, 37.7°, 43.8°, 54.3°, 57.9°, and 63.7°. Incidentally, this peak position may fluctuate within a range of ± 1°. For example, the LiNi₁₋ₓFeₓVO₄ (0 0 < x < 1) crystal phase ordinarily has a typical peak in the vicinity of 2θ = 18.7°, 30.7°, 36.2°, 37.9°, 44.0°, 54.7°, 58.3°, and 64.1°. Incidentally, this peak position may fluctuate within a range of ± 1°.

Also, the value of the "x" is preferably a value such as to allow higher discharge capacity than the case of x = 0. The value of the "x" is, for example, preferably 0.3 or less, more preferably 0.25 or less. The reason therefor is that too large value of the "x" brings a possibility of increasing the ratio of other crystal phases. On the other hand, the value of the "x" is ordinarily more then 0, preferably 0.05 or more, more preferably 0.1 or more. The reason therefor is that too small value of the "x" brings a possibility of not intending to improve discharge capacity.

Also, the cathode active material of the first aspect may have at least the crystal phase of the inverse-spinel structure, and preferably has it as the main phase. The phrase 'having as the main phase' signifies that the ratio of the crystal phase of the inverse-spinel structure is the largest with respect to all crystal phases contained in the cathode active material. In addition, the ratio of the crystal phase of the inverse-spinel structure is, for example, preferably 50 mol% or more, more preferably 70 mol% or more, and far more preferably 90 mol% or more. The reason therefor is to allow an improvement in discharge capacity to be further intended. In particular, the cathode active material of the first aspect preferably has the crystal phase of the inverse-spinel structure as a single phase. Incidentally, the ratio of the crystal phase of the inverse-spinel structure may be confirmed by Rietveld analysis.

Also, the cathode active material of the first aspect preferably has a composition of LiₐM₁₋ₓFeₓVO₄. The "x" is the same as the contents described above. The value of "a" is, for example, preferably 0.8 or more, more preferably 0.9 or more. The reason therefor is that too small value of a brings "a" possibility of not allowing sufficient discharge capacity. On the other hand, the value of "a" is, for example, preferably 1.2 or less, more preferably 1.1 or less. The reason therefor is that too large value of "a" brings a possibility of not allowing sufficient discharge capacity. Also, the operation potential of the cathode active material is, for example, preferably 4 V or more on the basis of lithium.

The shape of the cathode active material of the first aspect is not particularly limited but examples thereof include a particulate shape and a thin-film shape. In the case where the shape of the cathode active material is a particulate shape, the average particle diameter thereof (D₅₀) is not particularly limited but is, for example within a range of 1 nm to 100 µm, preferably within a range of 10 nm to 30 µm.

Also, a method of producing the cathode active material of the first aspect is not particularly limited but examples thereof include a method described in the after-mentioned 'C. Method of producing cathode active material 1. First aspect'.

### 2. Second aspect

The cathode active material of the second aspect comprises a crystal phase of an inverse-spinel structure represented by LiCo_{1-x-y}NiₓMn_{y}VO₄ (x and y satisfy 0 < x, 0 < y, and x + y < 1).

According to the second aspect, the substitution of part of Co constituting the inverse-spinel structure with Ni and Mn allows the cathode active material which performs extremely favorable discharge capacity. In other words, the use of three elements of Co, Ni and Mn as transition metal constituting the inverse-spinel structure allows the cathode active material which performs extremely favorable discharge capacity. As described in the first aspect described above, in LiCoVO₄ as the active material with the inverse-spinel structure, Li atom and Co atom exist in the same site. Thus, Li is inserted and desorbed with such difficulty that the initial capacity is conventionally obtained by only a half or less of theoretical capacity. On the other hand, in the second aspect, as described in the after-mentioned examples, it is conceived that specific metals different in ionic radius (Co, Ni and Mn) are disposed in a site of transition metal in the inverse-spinel structure, so that an ion diffusion pass changes, Li is easily inserted and desorbed, and discharge capacity improves dramatically. Incidentally, also in the second aspect, similarly to the first aspect described above, it is guessed that a tunnel appropriate for the transfer of Li ions is formed in the crystal phase of the inverse-spinel structure.

The cathode active material of the second aspect includes a crystal phase of an inverse-spinel structure represented by LiCo_{1-x-y}NiₓMn_{y}VO₄ (x and y satisfy 0 < x, 0 < y, and x + y < 1). The presence of this crystal phase of an inverse-spinel structure may be confirmed by X-ray diffraction (XRD) measurement, for example. This crystal phase ordinarily has a typical peak in the vicinity of 2θ = 18.5°, 30.5°, 36.0°, 37.7°, 43.8°, 54.3°, 57.9°, and 63.7°. Incidentally, this peak position may fluctuate within a range of ± 1°.

Also, the value of "x" and "y" in LiCo_{1-x-y}NiₓMn_{y}VO₄ is preferably a value such as to allow higher discharge capacity than the case of x = 0 and y = 0. It is conceived that the "x" prescribes the ratio of Ni and Ni contributes to higher electric potential of the cathode active material. The value of the "x" is, for example, 0.05 or more, preferably 0.1 or more. On the other hand, the value of the "x" is, for example, 0.9 or less, preferably 0.8 or less, more preferably 0.5 or less, and particularly preferably 0.4 or less. It is conceived that the "y" prescribes the ratio of Mn and Mn contributes to higher electric potential of the cathode active material. The value of the "y" is, for example, 0.05 or more, preferably 0.1 or more. On the other hand, the value of the "y" is, for example, 0.9 or less, preferably 0.8 or less, more preferably 0.5 or less, and particularly preferably 0.4 or less. Incidentally, from the viewpoint of the formation of the inverse-spinel structure,

"y" is preferably 0.5 or less. The (1-x-y) prescribes the ratio of Co. The value of the (1-x-y) is, for example, 0.1 or more, preferably 0.2 or more. On the other hand, the value of the (1-x-y) is, for example, 0.9 or less, preferably 0.8 or less, more preferably 0.5 or less, and particularly preferably 0.4 or less. In particular, in the second aspect, the crystal phase is preferably an LiCo_{1/3}Ni_{1/3}Mn_{1/3}VO₄ crystal phase.

Also, the cathode active material of the second aspect may have at least the crystal phase of the inverse-spinel structure, and preferably has it as the main phase. The phrase 'having as the main phase' signifies that the ratio of the crystal phase of the inverse-spinel structure is the largest with respect to all crystal phases contained in the cathode active material. In addition, the ratio of the crystal phase of the inverse-spinel structure is, for example, preferably 50 mol% or more, more preferably 70 mol% or more, and far more preferably 90 mol% or more. The reason therefor is to allow an improvement in discharge capacity to be further intended. In particular, the cathode active material of the second aspect preferably has the crystal phase of the inverse-spinel structure as a single phase. Incidentally, the ratio of the crystal phase of the inverse-spinel structure may be confirmed by Rietveld analysis.

Also, the cathode active material of the second aspect preferably has a composition of LiaCo_{1-x-y}NiₓMn_{y}VO₄. The "x" and "y" are the same as the contents described above. The value of "a" is, for example, preferably 0.8 or more, more preferably 0.9 or more, and far more preferably 1 or more. The reason therefor is that too small value of "a" brings a possibility of not allowing sufficient discharge capacity. On the other hand, the value of "a" is, for example, preferably 1.5 or less, more preferably 1.3 or less. The reason therefor is that too large value of "a" brings a possibility of not allowing sufficient discharge capacity. Also, the operation potential of the cathode active material is, for example, preferably 4 V or more on the basis of lithium.

The shape of the cathode active material of the second aspect is not particularly limited but examples thereof include a particulate shape and a thin-film shape. In the case where the shape of the cathode active material is a particulate shape, the average particle diameter thereof (D₅₀) is not particularly limited but is, for example within a range of 1 nm to 100 µm, preferably within a range of 10 nm to 30 µm.

Also, a method of producing the cathode active material of the second aspect is not particularly limited but examples thereof include a method described in the after-mentioned 'C. Method of producing cathode active material 2. Second aspect'.

### B. Lithium battery

Next, a lithium battery of the present invention is described. The lithium battery of the present invention is a lithium battery comprising a cathode layer containing a cathode active material, an anode layer containing an anode active material, and an electrolyte layer formed between the cathode layer and the anode layer, characterized in that the cathode active material is the cathode active material described above.

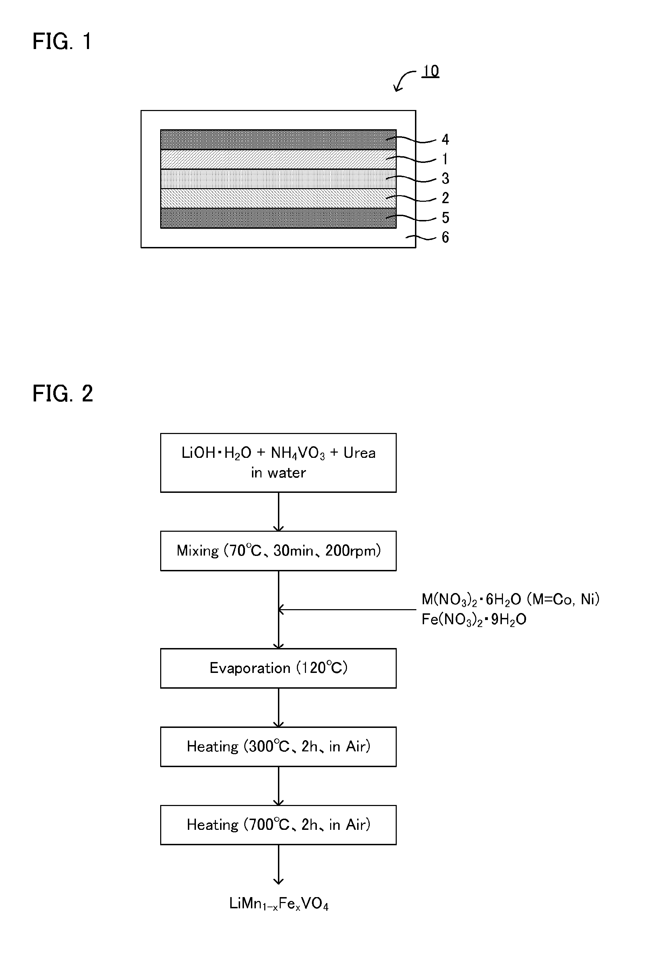

FIG. 1 is a schematic cross-sectional view showing an example of the lithium battery of the present invention. A lithium battery 10 shown in FIG. 1 comprises a cathode layer 1, an anode layer 2, an electrolyte layer 3 formed between the cathode layer 1 and the anode layer 2, a cathode current collector 4 for collecting the cathode layer 1, an anode current collector 5 for collecting the anode layer 2, and a battery case 6 for storing these members. Incidentally, for example, in the case where the electrolyte layer 3 includes a liquid electrolyte, the electrolyte layer 3 may be provided with a separator. On the other hand, in the case where the electrolyte layer 3 includes a solid electrolyte, the electrolyte layer 3 ordinarily need not be provided with a separator. Also, the lithium battery of the present invention is greatly characterized in that the cathode active material contained in the cathode layer 2 is the cathode active material described above.

According to the present invention, the use of the cathode active material described above allows the lithium battery having favorable discharge capacity.

The lithium battery of the present invention is hereinafter described in each constitution.

### 1. Cathode layer

The cathode layer in the present invention is a layer containing at least the cathode active material. Also, the cathode layer may contain at least one of a conductive material, a binder and a solid electrolyte material in addition to the cathode active material. The cathode active material in the present invention is the same as the contents described in 'A. Cathode active material'.

Examples of a material for the conductive material include a carbon material. In addition, specific examples of the carbon material include acetylene black, Ketjen Black, carbon black, coke, carbon fiber and graphite. Also, examples of a material for the binder include fluorine-based binders such as polyvinylidene fluoride (PVDF) and polytetrafluoroethylene (PTFE), and rubber-based binders such as styrene-butadiene rubber. Also, examples of the solid electrolyte material include a solid electrolyte material described in '3. Electrolyte layer'.

The content of the cathode active material in the cathode layer is preferably larger from the viewpoint of capacity; preferably, for example within a range of 60% by weight to 99% by weight, above all within a range of 70% by weight to 95% by weight. Also, the content of the conductive material is preferably smaller when the material may secure desired electron conduction; preferably, for example within a range of 1% by weight to 30% by weight. The thickness of the cathode layer varies greatly with the constitution of a lithium battery, and is preferably within a range of 0.1 µm to 1000 µm, for example.

### 2. Anode layer

The anode layer in the present invention is a layer containing at least the anode active material. Also, the anode layer may contain at least one of a conductive material, a binder and a solid electrolyte material in addition to the anode active material. Examples of the anode active material include metal active materials such as In, Al, Si and Sn, and carbon active materials such as mesocarbon microbeads (MCMB), high orientation property graphite (HOPG), hard carbon and soft carbon. Also, kind and ratio of the conductive material, the binder and the solid electrolyte material used for the anode layer are the same as the contents described in the cathode layer described above.

The content of the anode active material in the anode layer is preferably larger from the viewpoint of capacity; preferably, for example within a range of 60% by weight to 99% by weight, above all within a range of 70% by weight to 95% by weight. Also, the thickness of the anode layer varies greatly with the constitution of a lithium battery, and is preferably within a range of 0.1 µm to 1000 µm, for example.

### 3. Electrolyte layer

The electrolyte layer in the present invention is a layer formed between the cathode layer and the anode layer. Ion conduction between a cathode active material and an anode active material is performed through the electrolyte layer. The form of the electrolyte layer is not particularly limited but examples thereof include a liquid electrolyte layer, a gel electrolyte layer and a solid electrolyte layer.

The liquid electrolyte layer is preferably a layer obtained by using a nonaqueous liquid electrolyte. The nonaqueous liquid electrolyte ordinarily contains a lithium salt and a nonaqueous solvent. Examples of the lithium salt include inorganic lithium salts such as LiPF₆, LiBF₄, LiClO₄ and LiAsF₆; and organic lithium salts such as LiCF₃SO₃, LiN (CF₃SO₂)₂, LiN (C₂F₅SO₂)₂ and LiC (CF₃SO₂)₃. Examples of the nonaqueous solvent include ethylene carbonate (EC), propylene carbonate (PC), dimethyl carbonate (DMC), diethyl carbonate (DEC), ethyl methyl carbonate (EMC), butylene carbonate (BC), γ-butyrolactone, sulfolane, acetonitrile, 1,2-dimethoxymethane, 1,3-dimethoxypropane, diethyl ether, tetrahydrofuran, 2-methyltetrahydrofuran, and mixtures thereof. The concentration of the lithium salt in the nonaqueous liquid electrolyte is, for example, within a range of 0.5 mol/L to 3 mol/L.

The gel electrolyte layer may be obtained by adding and gelating a polymer to a nonaqueous liquid electrolyte, for example. Specifically, gelation may be performed by adding polymers such as polyethylene oxide (PEO), polyacrylonitrile (PAN) or polymethyl methacrylate (PMMA) to a nonaqueous liquid electrolyte.

The solid electrolyte layer is a layer obtained by using the solid electrolyte material. Examples of the solid electrolyte material include an oxide solid electrolyte material and a sulfide solid electrolyte material. Examples of the oxide solid electrolyte material having Li ion conductivity include Li₁₊ₓAlₓGe₂₋ₓ (PO₄)₃ (0 ≤ x ≤ 2), Li₁₊ₓAlₓTi₂₋ₓ (PO₄)₃ (0 ≤ x ≤ 2), LiLaTiO (such as Li_{0.34}La_{0.51}TiO₃), LiPON (such as Li_{2.9}PO_{3.3}N_{0.46} and LiLaZrO (such as Li₇La₃Zr₂O₁₂). On the other hand, examples of the sulfide solid electrolyte material having Li ion conductivity include an Li₂S-P₂S₅ compound, an Li₂S-SiS₂ compound and an Li₂S-GeS₂ compound.

The thickness of the electrolyte layer varies greatly with kinds of the electrolyte and constitutions of the lithium battery, and is preferably, for example within a range of 0.1 µm to 1000 µm, above all within a range of 0.1 µm to 300 µm.

### 4. Other constitutions

The lithium battery of the present invention comprises at least the cathode layer, anode layer and electrolyte layer described above, ordinarily further comprising a cathode current collector for collecting the cathode layer and an anode current collector for collecting the anode layer. Examples of a material for the current collectors include SUS, aluminum, copper, nickel, iron, titanium and carbon. The lithium battery of the present invention may comprise a separator between the cathode layer and the anode layer. The reason therefor is to allow the battery with higher safety.

### 5. Lithium battery

The lithium battery of the present invention may be a primary battery or a secondary battery, preferably a secondary battery among them. The reason therefor is to be repeatedly charged and discharged and be useful as a car-mounted battery, for example. Also, examples of the shape of the lithium battery of the present invention include a coin shape, a laminate shape, a cylindrical shape and a rectangular shape. Also, a producing method of the lithium battery is not particularly limited but is the same as a producing method in a general lithium battery.

### C. Method of producing cathode active material

Next, a method of producing a cathode active material of the present invention is described. The method of producing a cathode active material of the present invention may be roughly divided into two aspects. The method of producing a cathode active material of the present invention is described while divided into a first aspect and a second aspect.

### 1. First aspect

The method of producing a cathode active material of the first aspect comprises steps of: a preparation step of preparing a raw material solution in which a Li source, a M source (M is Co or Ni), a Fe source and a V source are dissolved or dispersed in a solvent, and a heat-treating step of removing the solvent contained in the raw material solution and heat-treating to thereby obtain a cathode active material having a crystal phase of an inverse-spinel structure represented by LiM₁₋ₓFeₓVO₄ (x satisfies 0 < x < 1).

FIG. 2 is a flow chart showing an example of the method of producing a cathode active material of the first aspect. In FIG. 2, lithium hydroxide monohydrate, ammonium vanadate and urea are prepared as the Li source, the V source and a chelating agent, respectively. Water is added to these raw materials and a stirrer, and stirred on the predetermined conditions. Thereafter, cobalt nitrate hexahydrate (nickel nitrate hexahydrate) and ferric nitrate nonahydrate are added as the Co source (or Ni source) and the Fe source respectively to obtain a raw material solution. Next, the water contained in the raw material solution is removed to heat-treat the obtained composition. Thus, a cathode active material is obtained.

According to the first aspect, the substitution of part of Co or Ni constituting the inverse-spinel structure with Fe allows the cathode active material which performs favorable discharge capacity. Also, according to the first aspect, the composition with high dispersibility is obtained by producing the raw material solution once to thereafter remove the solvent, not the so-called simple solid phase method. The first aspect has the advantage that the heat-treating for the composition allows an inverse-spinel structure to be easily formed.

The method of producing a cathode active material of the first aspect is hereinafter described in each step.

### (1) Preparation step

The preparation step in the first aspect is a step of preparing a raw material solution in which a Li source, a M source (M is Co or Ni), a Fe source and a V source are dissolved or dispersed in a solvent.

The raw material solution is a solution in which a Li source, a M source (Co source or Ni source), a Fe source and a V source are dissolved or dispersed in a solvent. The kind of each of the Li source, the M source, the Fe source and the V source is not particularly limited and examples thereof include inorganic salts, complexes, oxides and hydroxides. Examples of the inorganic salts include carbonate, nitrate, hydrochloride, oxalate and ammonium salt. Specific examples of the Li source include LiOH, Li₂CO₃, Li₂O and CH₃COOLi·H₂O. Specific examples of the Co source include Co(NO₃)₂, CoCO₃, Co (CH₃COO)₂·4H₂O, CoSO₄·7H₂O and CoC₂O₄·4H₂O. Specific examples of the Ni source include Ni(NO₃)₂·6H₂O, NiCO₃, Ni(CH₃COO)₂·4H₂O, NiSO₄·6H₂O and NiC₂O₄·2H₂O. Specific examples of the Fe source include Fe(NO₃)₃·9H₂O, FeCO₃, Fe(CH₃COO)₂·4H₂O, FeSO₄·7H₂O and FeC₂O₄. Specific examples of the V source include NH₄VO₃, V₂O₃ and V₂O₅. Incidentally, the O source is not particularly limited and may be oxygen contained in each raw material, or oxygen present in an atmosphere during the heat treatment.

Also, the raw material solution contains the solvent. Examples of the solvent include water; and alcohols such as methanol, ethanol and propanol. In addition, the raw material solution may contain a chelating agent for controlling the particle diameter of an obtained cathode active material to a small diameter. Examples of such a chelating agent include urea and citric acid.

The ratio of each raw material in the raw material solution is not particularly limited but is preferably adjusted so as to allow a desired cathode active material. Also, examples of a method for preparing the raw material solution include a method for adding each raw material to a solvent and stirring. On this occasion, stirring treatment is preferably performed for a long time for a raw material with low solubility in the solvent in consideration of solubility in the solvent.

### (2) Heat-treating step

The heat-treating step in the first aspect is a step of removing the solvent contained in the raw material solution and heat-treating to thereby obtain a cathode active material having a crystal phase of an inverse-spinel structure represented by LiM₁₋ₓFeₓVO₄ (x satisfies 0 < x < 1).

A method for removing the solvent contained in the raw material solution is not particularly limited and examples thereof include a method for heating. The heating temperature in removing the solvent is, for example, preferably within a range of 60°C to 200°C, more preferably within a range of 70°C to 130°C. The reason therefor is that too low heating temperature brings a possibility of not efficiently capable of removing the solvent, whereas too high heating temperature brings a possibility of causing an unnecessary side reaction. Also, in the first aspect, the solvent in the raw material solution may be removed under reduced pressure. The pressure in decompressing is not particularly limited when the pressure is lower than atmospheric pressure, but is preferably adjusted properly so as to allow the solvent to be efficiently removed and allow bumping to be restrained from occurring. In particular, in the first aspect, the raw material solution is preferably heated under reduced pressure. The reason therefor is to allow the solvent to be removed more efficiently. Incidentally, the treatment for removing the solvent in the raw material solution and the after-mentioned heat treatment may be different processes or the same process.

In the first aspect, the heat treatment is performed for the composition from which the solvent is removed. The heat treatment temperature is not particularly limited if the temperature allows an intended cathode active material to be synthesized, but is, for example, preferably within a range of 200°C to 1000°C, more preferably within a range of 250°C to 800°C. The reason therefor is that too low heat treatment temperature brings a possibility of not forming a crystal phase of an inverse-spinel structure, whereas too high heat treatment temperature brings a possibility of causing an unnecessary crystal phase.

The atmosphere in heat-treating is not particularly limited but is preferably an atmosphere containing oxygen. Specifically, the heat treatment is preferably performed in an air atmosphere. The heat treatment time is, for example, preferably within a range of 1 hour to 25 hours, more preferably within a range of 2 hours to 10 hours. Examples of a heating method include a method by using a burning furnace.

### 2. Second aspect

The method of producing a cathode active material of the second aspect comprises steps of: a preparation step of preparing a raw material solution in which a Li source, a Co source, a Ni source, a Mn source and a V source are dissolved or dispersed in a solvent, and a heat-treating step of removing the solvent contained in the raw material solution and heat-treating to thereby obtain a cathode active material having a crystal phase of an inverse-spinel structure represented by LiCo_{1-x-y}NiₓMn_{y}VO₄ (x and y satisfy 0 < x, 0 < y, and x + y < 1).

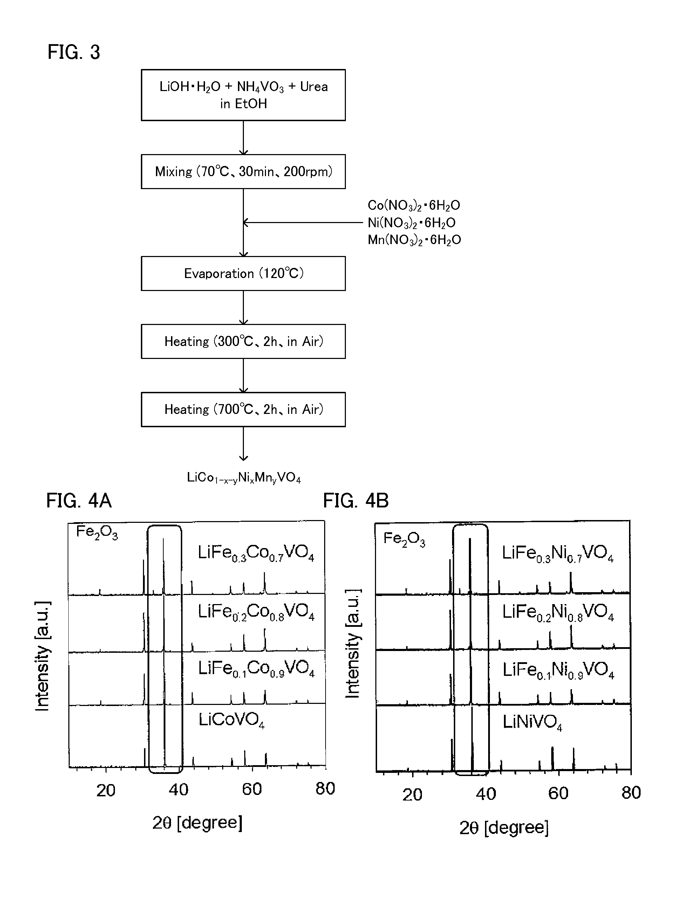

FIG. 3 is a flow chart showing an example of the method of producing a cathode active material of the second aspect. In FIG. 3, lithium hydroxide monohydrate, ammonium vanadate and urea are prepared as the Li source, the V source and a chelating agent, respectively. Ethanol is added to these raw materials and a stirrer, and stirred on the predetermined conditions. Thereafter, cobalt nitrate hexahydrate, nickel nitrate hexahydrate and manganese nitrate hexahydrate are added as the Co source, the Ni source and the Mn source respectively to obtain a raw material solution. Next, the ethanol contained in the raw material solution is removed to heat-treat the obtained composition. Thus, a cathode active material is obtained.

According to the second aspect, the substitution of part of Co constituting the inverse-spinel structure with Ni and Mn allows the cathode active material which performs extremely favorable discharge capacity. In other words, the use of three elements of Co, Ni and Mn as transition metal constituting the inverse-spinel structure allows the cathode active material which performs extremely favorable discharge capacity. Also, according to the second aspect, the composition with high dispersibility is obtained by producing the raw material solution once to thereafter remove the solvent, and not by the so-called simple solid phase method. The second aspect has the advantage that the heat-treating for the composition allows an inverse-spinel structure to be easily formed.

The method of producing a cathode active material of the second aspect is hereinafter described in each step.

### (1) Preparation step

The preparation step in the second aspect is a step of preparing a raw material solution in which a Li source, a Co source, a Ni source, a Mn source and a V source are dissolved or dispersed in a solvent.

The raw material solution is a solution in which a Li source, a Co source, a Ni source, a Mn source and a V source are dissolved or dispersed in a solvent. The Li source, the Co source, the Ni source and the V source are the same as the contents described in the first aspect described above. Also, examples of the Mn source include inorganic salts, complexes, oxides and hydroxides. Examples of the inorganic salts include carbonate, nitrate, hydrochloride, oxalate and ammonium salt. Specific examples of the Mn source include Mn(NO₃)₂, MnCO₃, Mn (CH₃COO)₂·4H₂O, MnSO₄·H₂O and MnC₂O₄·2H₂O. Also, other items are basically the same as the contents described in the first aspect described above.

### (2) Heat-treating step

The heat-treating step in the second aspect is a step of removing the solvent contained in the raw material solution and heat-treating to thereby obtain a cathode active material having a crystal phase of an inverse-spinel structure represented by LiCo_{1-x-y}NiₓMn_{y}VO₄ (x and y satisfy 0 < x, 0 < y, and x + y < 1). The heat-treating step is basically the same as the contents described in the first aspect described above.

Incidentally, the present invention is not limited to the embodiments. The embodiments are exemplification, and any is included in the technical scope of the present invention if it has substantially the same constitution as the technical idea described in the claim of the present invention and offers similar operation and effect thereto.

### Examples

The present invention is described more specifically while showing examples hereinafter.

### [Example 1]

### (Synthesis of cathode active material)

A cathode active material was synthesized in accordance with the flow chart of FIG. 2. First, water was added to lithium hydroxide monohydrate, ammonium vanadate, urea and a stirrer, and stirred for 30 minutes on the conditions of 70°C and 200 rpm. Next, cobalt nitrate hexahydrate and ferric nitrate nonahydrate were added thereto. Incidentally, the ratio of each raw material was adjusted so as to obtain LiCo₁₋ₓFeₓVO₄ (x = 0.1). Next, the water contained in the obtained raw material solution was removed by an evaporator. On the occasion, the raw material solution was heated to a temperature of 120°C. Next, the raw material solution was provisionally burned for 2 hours on the conditions of an air atmosphere and 300°C, and thereafter really burned for 2 hours on the conditions of an air atmosphere and 700°C to thereby obtain a cathode active material.

### (Production of evaluation battery)

The obtained cathode active material, acetylene black (AB), and PVDF were weighed so as to be a weight ratio of cathode active material : AB : PVDF = 70 : 25 : 5. N-methyl-2-pyrrolidone as a dispersant was added to this mixture to produce slurry. Next, this slurry was applied to a cathode current collector of Ni mesh and dried to thereby obtain a cathode layer.

A 2032-type coin cell made of SUS was produced by using the obtained cathode layer. Metallic lithium was used as an anode active material, and a solution such that LiPF₆ was dissolved at a ratio of 1 mol/L in a nonaqueous solvent, in which EC and DMC were mixed at a volume ratio of EC : DMC =1:1, was used as a nonaqueous liquid electrolyte. Thus, an evaluation battery was obtained.

### [Examples 2 and 3, Comparative Example 1]

A cathode active material was obtained in the same manner as Example 1 except for changing the ratio of each raw material into x = 0.2, x = 0.3 and x = 0, respectively. In addition, an evaluation battery was obtained in the same manner as Example 1 except for using the obtained cathode active material.

### [Example 4]

A cathode active material was obtained in the same manner as Example 1 except for replacing cobalt nitrate hexahydrate with nickel nitrate hexahydrate. Incidentally, the ratio of each raw material was adjusted so as to obtain LiNi₁₋ₓFeₓVO₄ (x = 0.1). In addition, an evaluation battery was obtained in the same manner as Example 1 except for using the obtained cathode active material.

### [Examples 5 and 6, Comparative Example 2]

A cathode active material was obtained in the same manner as Example 4 except for changing the ratio of each raw material into x = 0.2, x = 0.3 and x = 0, respectively. In addition, an evaluation battery was obtained in the same manner as Example 4 except for using the obtained cathode active material.

### [Evaluations 1]

### (XRD measurement)

XRD measurement (with the use of a CuKα ray) was performed for the cathode active material obtained in Examples 1 to 6 and Comparative Examples 1 and 2. The results are shown in FIGS. 4A and 4B. As shown in FIG. 4A, it was confirmed that the cathode active material each obtained in Examples 1 to 3 exhibited a typical peak in 2θ = 18.5°, 30.6°, 36.0°, 37.7°, 43.8°, 54.3°, 57.9° and 63.7°, and had the crystal phase of LiCo₁₋ₓFeₓVO₄. As shown in FIG. 4B, it was confirmed that the cathode active material obtained in Examples 4 to 6 exhibited a typical peak in 2θ = 18.7°, 30.7°, 36.2°, 37. 9°, 44.0°, 54.7°, 58.3° and 64.1°, and had the crystal phase of LiNi₁₋ₓFeₓVO₄. In particular, it was confirmed that the cathode active material each obtained in Examples 1, 2, 4 and 5 had the crystal phase of LiM₁₋ₓMnₓVO₄ as a single phase. On the contrary, it was confirmed that the cathode active material each obtained in Examples 3 and 6 exhibited a peak seemingly derived slightly from impurities.

### (Charge-discharge test)

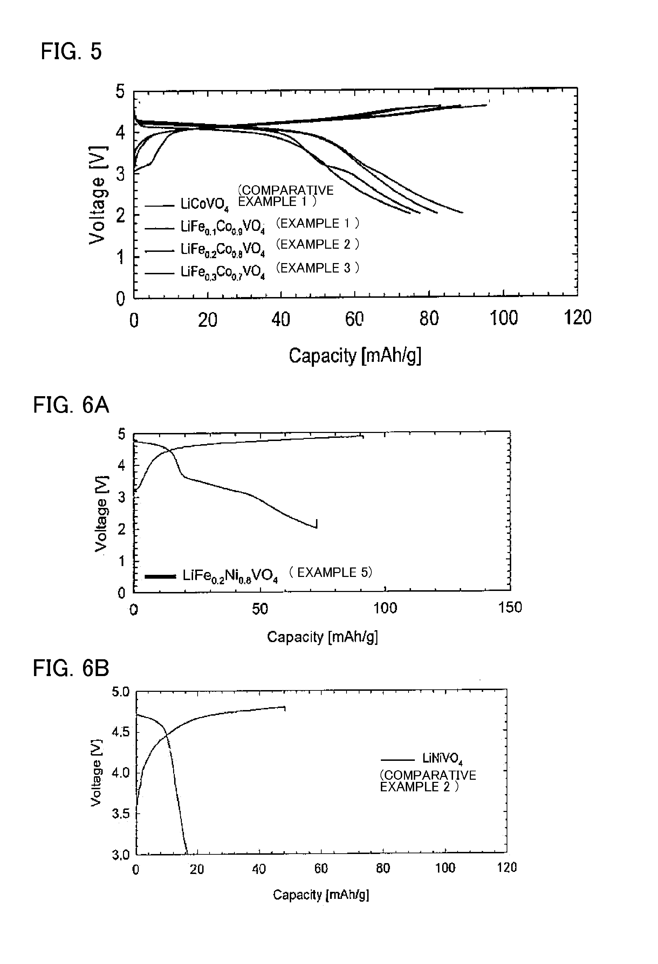

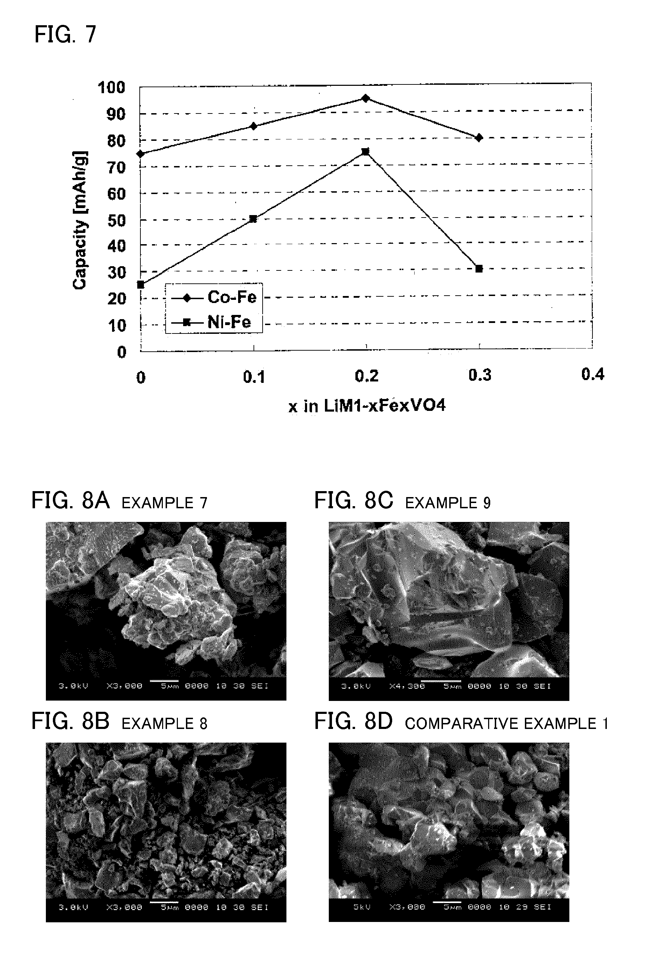

A charge-discharge test was performed for the evaluation battery each obtained in Examples 1 to 3 and Comparative Example 1. With regard to the charge, constant-current charge was performed at 0.011 mA/cm² up to 4.8 V. Thereafter, discharge was performed up to 2 V to obtain discharge capacity. The results are shown in FIG. 5. Also, a similar charge-discharge test was performed for the evaluation battery each obtained in Example 5 and Comparative Example 2. The results are shown in FIGS. 6A and 6B. In addition, the change of discharge capacity with respect to the substituted amount of Fe is shown in FIG. 7. As shown in FIGS. 5 to 7, it was confirmed that the substitution of part of Co or Ni with Fe allowed discharge capacity to be increased. In particular, in the case of Example 2 (x = 0.2 in Co-Fe system), a capacity close to 100 mAh/g was obtained. It was confirmed that Fe singly did not allow the spinel structure to be formed but the substitution of part of Co or Ni with Fe allowed discharge capacity to be increased. Also, it was confirmed that the cathode active material each obtained in any of Examples 1 to 3 had a high electric potential of 4 V or more and retained the property of high electric potential in the inverse-spinel structure.

### [Example 7]

A cathode active material was synthesized in accordance with the flow chart of FIG. 3. First, ethanol was added to lithium hydroxide monohydrate, ammonium vanadate, urea and a stirrer, and stirred for 30 minutes on the conditions of 70°C and 200 rpm. Next, cobalt nitrate hexahydrate, nickel nitrate hexahydrate and manganese nitrate hexahydrate were added thereto. Incidentally, the ratio of each raw material was adjusted so as to obtain LiₐCo_{1/3}Ni_{1/3}Mn_{1/3}VO₄ (a = 1). Next, the ethanol contained in the obtained raw material solution was removed by an evaporator. On the occasion, the raw material solution was heated to a temperature of 120°C. Next, the raw material solution was provisionally burned for 2 hours on the conditions of an air atmosphere and 300°C, and thereafter really burned for 2 hours on the conditions of an air atmosphere and 700°C to thereby obtain a cathode active material. In addition, an evaluation battery was obtained in the same manner as Example 1 except for using the obtained cathode active material.

### [Examples 8 and 9]

A cathode active material was obtained in the same manner as Example 7 except for changing the ratio of lithium hydroxide monohydrate into each of a = 1.1 and a = 1.2, and changing the solvent from ethanol into water. In addition, an evaluation battery was obtained in the same manner as Example 7 except for using the obtained cathode active material.

### [Evaluations 2]

### (SEM observation)

SEM observation was performed for the cathode active material each obtained in Examples 7 to 9 and Comparative Example 1. The results are shown in FIGS. 8A to 8D. As shown in FIGS. 8A to 8D, it may be confirmed that the desired cathode active material was obtained in any of Examples and Comparative Example.

### (XRD measurement)

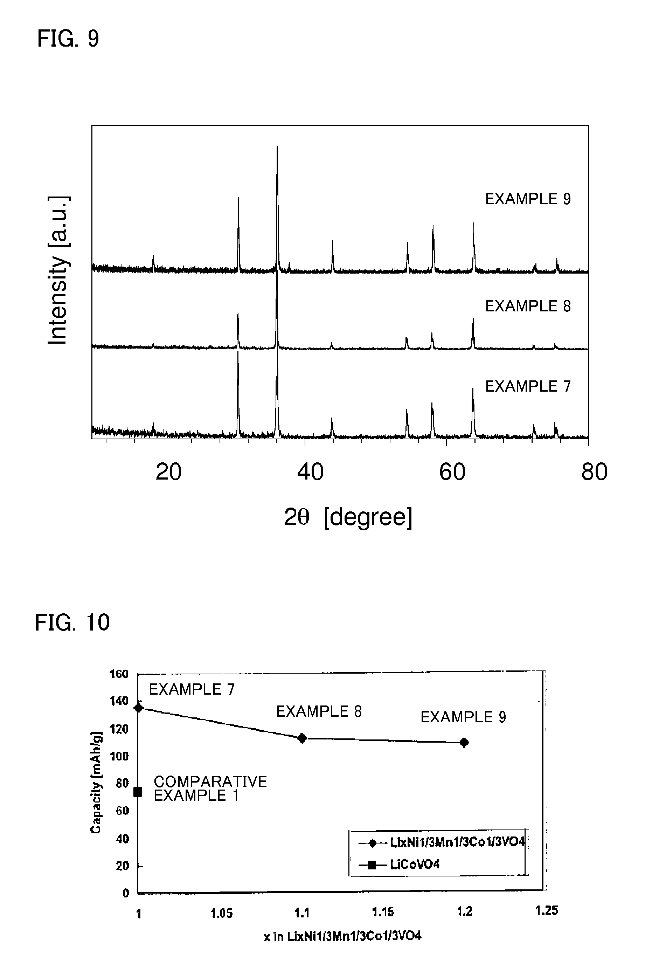

XRD measurement (with the use of a CuKα ray) was performed for the cathode active material each obtained in Examples 7 to 9. The results are shown in FIG. 9. As shown in FIG. 9, it was confirmed that the cathode active material obtained in Examples 7 to 9 exhibited a typical peak in 2θ = 18.6°, 30.7°, 36.0°, 37.7°, 43.7°, 54.3°, 57.9° and 63.5°, and had the crystal phase of LiCo_{1-x-y}NiₓMn_{y}VO₄. In particular, it was confirmed that the cathode active material each obtained in Examples 7 and 8 had the crystal phase of LiCo_{1-x-y}NiₓMn_{y}VO₄ as a single phase. On the contrary, it was confirmed that the cathode active material obtained in Example 9 exhibited a peak seemingly derived slightly from impurities.

### (Charge-discharge test)

A charge-discharge test was performed for the evaluation battery each obtained in Examples 7 to 9 and Comparative Example 1. With regard to the charge, constant-current charge was performed at 0.011 mA/cm² up to 4.8 V. Thereafter, discharge was performed up to 2 V to obtain discharge capacity. The results are shown in FIG. 10. As shown in FIG. 10, it was confirmed that the use of three elements (Co, Ni and Mn) as transition metal allowed discharge capacity to be comparatively improved. In particular, in the case of Example 7 (a = 1), the discharge capacity became approximately 140 mAh/g close to theoretical capacity. This is an innovative capacity in the active material having the inverse-spinel structure. Also, in Example 8 (a = 1.1) and Example 9 (a = 1.2), the discharge capacity became 100 mAh/g or more and an extremely high capacity was obtained as the active material having the inverse-spinel structure. Incidentally, it was confirmed that the cathode active material obtained in any of Examples 7 to 9 had a high electric potential of 4 V or more and retained the property of high electric potential in the inverse-spinel structure.

### Reference Signs List

- 1: cathode layer
- 2: anode layer
- 3: electrolyte layer
- 4: cathode current collector
- 5: anode current collector
- 6: battery case
- 10: battery

## Claims

1. A cathode active material comprising a crystal phase of an inverse-spinel structure represented by LiM₁₋ₓFeₓVO₄ (M is Co or Ni, and x satisfies 0 < x < 1).

2. The cathode active material according to claim 1, **characterized in that** the x satisfies 0 < x ≤ 0.3.

3. A cathode active material comprising a crystal phase of an inverse-spinel structure represented by LiCo_{1-x-y}NiₓMn_{y}VO₄ (x and y satisfy 0 < x, 0 < y, and x + y < 1).

4. The cathode active material according to claim 3, **characterized in that** both the x and the y are 1/3.

5. The cathode active material according to claim 3 or 4, comprising a composition of LiₐCo_{1-x-y}NiₓMn_{y}VO₄ (a satisfies 1 ≤ a ≤ 1.3).

6. A lithium battery comprising a cathode layer containing a cathode active material, an anode layer containing an anode active material, and an electrolyte layer formed between the cathode layer and the anode layer,
**characterized in that** the cathode active material is the cathode active material according to any of claims 1 to 5.

7. A method of producing a cathode active material comprising steps of:
a preparation step of preparing a raw material solution in which a Li source, a M source (M is Co or Ni), a Fe source and a V source are dissolved or dispersed in a solvent; and
a heat-treating step of removing the solvent contained in the raw material solution and heat-treating to thereby obtain a cathode active material having a crystal phase of an inverse-spinel structure represented by LiM₁₋ₓFeₓVO₄ (x satisfies 0 < x < 1).

8. A method of producing a cathode active material comprising steps of:
a preparation step of preparing a raw material solution in which a Li source, a Co source, a Ni source, a Mn source and a V source are dissolved or dispersed in a solvent; and
a heat-treating step of removing the solvent contained in the raw material solution and heat-treating to thereby obtain a cathode active material having a crystal phase of an inverse-spinel structure represented by LiCo_{1-x-y}NiₓMn_{y}VO₄ (x and y satisfy 0 < x, 0 < y, and x + y < 1).
